# EUROPEAN PATENT APPLICATION

(11) **EP 1 953 459 A2**
(43) Date of publication of application: **06.08.2008**
(21) Application number: 08001492.1
(22) Date of filing: 28.01.2008
(51) Int. Cl.: F24D 19/10

(54) **Floor heating thermostat**

(30) Priority: 02.02.2007 FI 20070090
(71) Applicant: Etherma Skandinavia Oy, 01510 Vantaa (FI)
(72) Inventor: Jokela, Mikko, 26100 Rauma (FI)
(74) Representative: Järveläinen, Pertti Tauno Juhani

(57) **Abstract**

A voltage-independent floor heating thermostat provided with a fault-current protector, which contains a base part (1), a lid part (2) and fitted between them a circuit board (4), to which circuit board components are connected, at least the relay of the floor heating thermostat and a capacitor circuit, and into which thermostat a fault-current protector is integrated, in which at least the relay of the floor heating thermostat and the capacitor circuit are connected to the bottom surface of the circuit board (4).

## Description

### Field of technology

The object of the invention is a floor heating thermostat provided with a fault-current protector.

More particularly the object of the invention is a floor heating thermostat provided with a fault-current protector, which contains a base part, a lid part and a circuit board, to which is connected at least the relay of the floor heating thermostat and a capacitor circuit.

Floor heating implemented with electricity requires a floor heating thermostat. Floor heating thermostats control according to the temperature sensed by an external sensor installed inside the floor. Floor heating thermostats can be installed as e.g. surface-mounted, flush-mounted or so-called DIN rail mounted. Of these, the surface-mounted models are installed on top of the terminal box, the flush-mounted models partly recessed as face plate installations, and the models fixable to a DIN rail are fixed to the DIN rail on the power distribution board. The common factor for these is that they regulate the temperature purely on the basis of the changing value of the floor sensor. They may also contain temperature drop regulation. Temperature drop regulation means changing the temperature of the floor to be smaller during a controlled time.

Floor heating implemented with electricity requires the connection of a fault-current protector compliant with regulations as a part of the system.

A fault-current protector is typically provided with 30 mA fault-current measurement. The appliance works, in the case of a fault-current, by tripping the fault-current protector if the measuring circuit of the appliance detects a deviation in the sum current going through the fault-current protector, causing leakage current between the phase and the ground potential, in which case a life-threatening electric shock to the user can come from the floor heating cable.

The fault-current protector operates as follows: When the electrical device functions normally, the electric current going into it and coming out of it is the same magnitude. Differences between the ingoing and outgoing electric current arises when a fault-current phenomenon occurs. The fault-current protective switch monitors the amount of current entering the electrical device and leaving it. As long as these amounts are the same magnitude the passage of the electric current is unimpeded. If a part of the electric current travels to earth as fault-current, the fault-current protective switch then detects a difference between the incoming and outgoing current amount. At the moment when the amount of fault-current reaches a dangerous limit or exceeds it, the current supply is disconnected. The fault-current protective switch contains a switch that controls a magnetic tripping device or an electronic relay that corresponds to it.

There are two types of fault-current protectors, voltage-dependent and voltage-independent.

A voltage-independent fault-current protector only trips in a fault-current situation, but the controllable output contact does not open in conjunction with e.g. a voltage outage, and thus does not need to be re-tuned when the voltage has returned. The fault-current protector can be used e.g. for floor heating protection. The device connected to the circuit of the fault-current protector operates normally when the voltage has returned.

A voltage-dependent fault-current protector also trips only in a fault-current situation, but the controllable output contact opens in conjunction with e.g. a voltage outage, and thus requires re-tuning of the fault-current protector when the voltage has returned. This kind of fault-current protector cannot be used e.g. for floor heating protection. The device connected to the circuit of the fault-current protector does not operate normally when the voltage has returned.

### Prior art

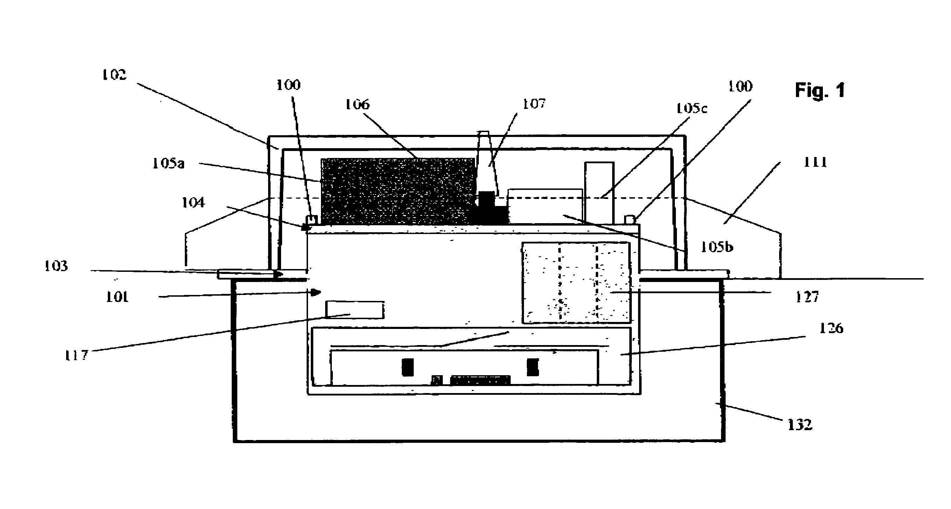

One prior-art floor heating thermostat, which contains a floor heating thermostat provided with a voltage-independent fault-current protector integrated into the thermostat, is presented as a cross-section diagram in Fig. 1. It contains a base part 101, a lid part 102 and a circuit 104 board fitted between them, onto the top of which is connected the relay 105a of the floor heating thermostat, the X-capacitor 105c and electrolytic capacitors, the connector pair of the sensor and other electronics 105b required by the appliance. The fault-current protector contains a switch component 126 situated on the bottom of the base part and a fault-current current transformer 127.

The floor heating thermostat in question is flush-mounted, such that a part of the appliance, the base part 101, is left inside the terminal box 132 and a part of the appliance is visible protruding through the face plate 111 incorporated in the individual connection set used and with the lid part 102 of the appliance functioning as the face plate of the installation set. The output relay of the appliance is rated for a nominal current of up to 16 A, permitting loads of up to 16 A.

The appliance in question functions only as a floor heating thermostat.

One of the biggest drawbacks of the appliance is that the appliance in question, especially when used with floor heating cables rated for a nominal current of over 10 A, which require supply wires of 2.5 square millimetres in cross-section, is difficult to install, because of the shallowness of the terminal box 132 remaining below the appliance. A supply wire of 2.5 square millimetres in cross-section is very rigid, setting much higher requirements for the installation work than e.g. installing a supply wire rated for a nominal current of 10 A and having a cross-section of e.g. 1.5 square millimetres.

In addition the regulated temperature of the appliance cannot be dropped by means of an external control, and neither can the appliance be used as a combined floor/room thermostat.

Also the fact that the input and output connectors of the appliance are so-called screwless-type terminals, suited only to a single-wire cable, partly causes problems.

Since there are also heating cables in which the supply cables can be multi-stranded, requiring a bimetallic connector, the multi-strand connection lead of the cable can be changed to a single cable.

When using these kinds of cables the installation space remaining below the appliance is just sufficient, although still being very difficult from the viewpoint of installation.

The appliance cannot either be remotely controlled nor can information about the status, heating, malfunction, or similar, of the appliance be obtained.

### Summary of the invention

The purpose of the invention is to eliminate the drawbacks of prior art and to achieve a floor heating regulator provided with a fault-current protection switch, which when installed leaves appreciably more space in the terminal box. This is achieved such that all the components of the appliance connected to the circuit board that are over 5 mm high and do not penetrate the lid and the component cover of the appliance are installed onto the bottom surface of the circuit card.

The appliance can also be used as a combined floor/room thermostat, as a model that is very much smaller in its total depth dimension than a prior art appliance. In addition, an option for connecting an intermediate output to the resulting product is achieved, e.g. behind the alarm current protector, the control current protector and also the fault-current protector.

Room thermostats control the temperature of the floor on the basis of the room sensor, and they can also contain a temperature drop control function.

Combined thermostats operate such that the external sensor of the floor heating thermostat functions as a temperature limiter, in which case the temperature is actually adjusted according to the change in the resistance value of a fixed resistor built into the appliance, most commonly an NTC resistor, as the temperature of the room changes. They can also include the option for temperature drop control.

More precisely, the floor heating thermostat according to the invention is characterized by what is disclosed in the characterization part of claim 1.

Some preferred embodiments of the invention are disclosed in the other claims.

### Brief description of the drawings

In the following, the invention will be described in more detail by the aid of an embodiment with reference to the attached drawings, wherein
Fig. 1 presents a sectioned side view of a prior art floor heating thermostat,
Fig. 2 presents a sectioned side view of the floor heating thermostat according to the invention,
Fig. 3 presents a side view of the module attachable to the base part of the thermostat according to Fig. 2.

### Description of preferred embodiments of the invention

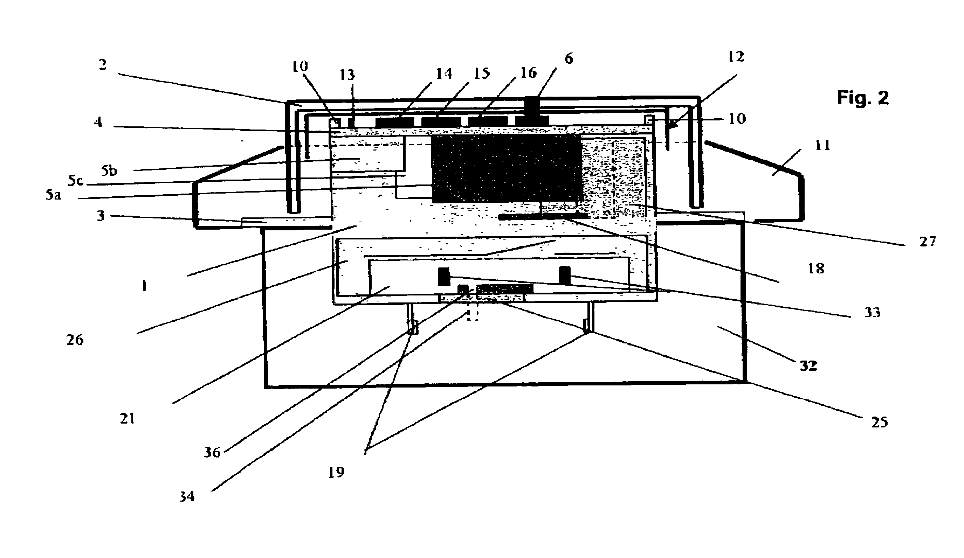

Fig. 2 presents a floor heating thermostat according to the invention, which is a floor heating thermostat provided with a voltage-independent fault-current protector integrated into the thermostat. It comprises a base part 1, a lid part 2 and fitted between them a circuit board 4, onto the bottom of which is connected the relay 5a of the floor heating thermostat, an X-capacitor 5c and electrolytic capacitors, a potentiometer 5b. The fault-current protector contains a switch component 26 situated in its base part and a fault-current current transformer 27.

This floor heating thermostat is also flush-mounted, such that a part of the appliance, the base part 1, remains inside the terminal box 32 and a part of the appliance is visible protruding through the centre of the face plate 11 incorporated in the individual connection set used and with the lid part 2 of the appliance functioning as the face plate of the installation set.

In comparison with current appliances, the depth of the base part 1 has been increased, e.g. by approx. 4 mm, and likewise the fixing points 10 (100 in Fig. 1) of the circuit card have been moved approx. 4 mm higher from their previous level, in which case space is formed inside the appliance such that it is now possible to dispose below the circuit card 4 all the components that were above the circuit card in the depth direction, as well as the components over 5 mm high that do not protrude through the lid 2 formed by the faceplate.

The pushbutton 6 of the testing circuit installed on the surface of the circuit board does not require an extension stem (107, Fig. 1) as previously, the side of its frame part thus fitting on the surface of the circuit card below the cover in the approx. 5 mm high space, now provided with an additional protective cover 12, remaining between the circuit card and the additional protective cover 12.

A thin, approx. 0.5 mm thick, protective cover 12 is made to protect the components on top of the circuit card 4 of the appliance, as protection against contact, which enables the operating procedures required by the more versatile future use of the appliance, in which case it is safe for also the end user to make any adjustments associated with limiting the temperature drop or floor heating. The gap between the circuit card and the additional protective cover is approx. 5 mm.

The rapid connectors 13 of the sensor of the floor heating thermostat as well as the temperature drop adjustment potentiometer 14, selection switch 15 of the combined room/floor heating thermostat and the potentiometer 16 for limiting the floor heating are also disposed in this approx. 5 mm high space in conjunction with the re-modification of the appliance.

In addition the space-consuming diode packet (117 in Fig. 1) can be replaced with its own circuit card 18 installed inside the appliance.

The fixing neck 3 in the base part of the appliance is moved to a shallower level with respect to the base, in which case an additional space of e.g. approx. 7 mm is left in the terminal box of the appliance.

With the depth of the terminal box being approx. 40 mm, the additional space of approx. 7 mm achieved inside it is a very significant improvement.

Thus the appliance is made into a more versatile model with regulation of the floor heating and/or room temperature and with an external temperature drop option.

Reducing the external depth is also enabled by the 4, or more, approx. 12 mm long fixing claws 19 made on the base part of the appliance.

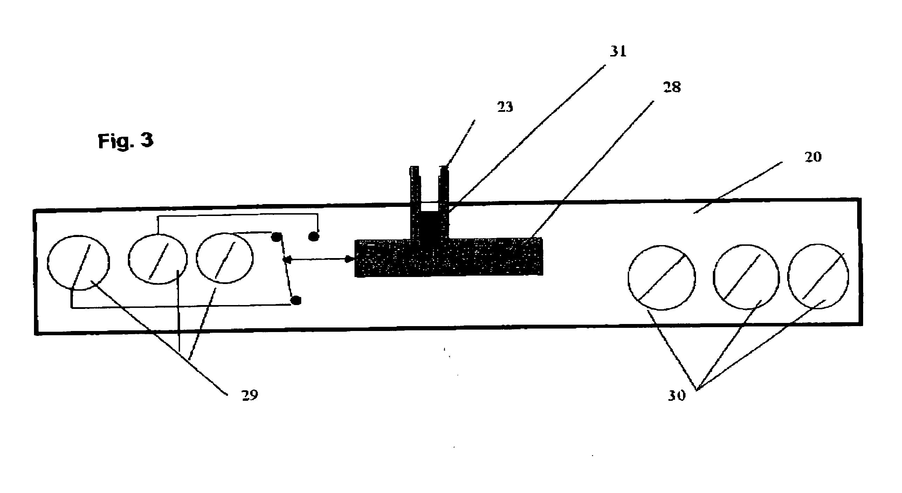

By means of these a separate connector module, alarm module or additional module (20 in Fig. 3) can if so desired, be fixed to the base of the appliance. In this additional module according to the solution all these functions can be all in the same appliance, or each can have its own module type, with the external appearance of the module remaining similar and the fixing to the bottom surface of the appliance occurring in the same way in all of them.

By means of this additional module it is possible to perform remote monitoring or remote control of the appliance, or to take an intermediate output from the fault-current, e.g. for the lighting, electrical sockets or similar of the same room, or to receive e.g. alarm information about a malfunction of the appliance.

### Installation and use of the additional module:

The module is fixed to the base of the appliance with the fixing claws of the base part 1.

Inside the thermostat provided with a fault-current protector is a switch element part 21, which is rectangular in shape and which according to the operation of the appliance is at one extreme end when it is in the O-position moving to its other extreme position when the appliance is energized, in the I-position.

A rectangularly-shaped aperture 25 is made in the base of the appliance, which is situated below the moving part 21 of the switch element.

This rectangularly-shaped part 21 contains on its bottom surface a prefabricated intermediate wall 36, to which the slot 23 of the additional module that is an element of the part 28 that moves to-and-fro inside the additional module, and which protrudes through its own cover, is fixed through the groove 25 made in the middle of the base part of the appliance.

The output contact of the additional module is controlled via the moving part 28, in which case e.g. an alarm about the operation of the appliance is obtained via the output connectors of the additional module when the fault-current part trips.

The additional module thus contains its own separate connectors 29 for monitoring the alarm. The other connectors 30 of the additional module can, depending on the module type, be utilized also in conjunction with using the fault-current intermediate output or remote control of the appliance.

With these aforementioned modifications more space is obtained in a wall-mounted terminal box, as the total depth of the appliance typically changes from its current approx. 53 millimetres to approx. 46 millimetres.

The appliance can be made more versatile with respect to the functioning of the thermostat, however without the need to increase the physical dimensions of the appliance.

To the contrary, reducing the physical size permits an additional module to be also added to the appliance that improves its operating characteristics.

Thus conveyance of alarm information when the fault-current part trips is also achieved by means of the additional module.

Additionally the opportunity for implementing an intermediate output option after the fault-current part is achieved.

In addition an option for remote control of the appliance is also achieved.

It is obvious to the person skilled in the art that the different embodiments of the invention are not limited solely to the example described above, but that they may be varied within the scope of the claims presented below.

## Claims

1. A voltage-independent floor heating thermostat provided with a fault-current protector, which contains a base part (1), a lid part (2) and fitted between them a circuit board (4), to which circuit board components are connected, at least the relay of the floor heating thermostat and a capacitor circuit, and into which thermostat a fault-current protector is integrated,
**characterized in that** at least the relay of the floor heating thermostat and the capacitor circuit are connected to the bottom surface of the circuit board (4).

2. Thermostat according to claim 1, **characterized in that** it contains a protective cover (12) under the lid part, and **in that** all the components connected to the circuit board that are essentially over 5 mm high and do not penetrate the lid part (2) and the protective cover (12) are connected to the bottom surface of the circuit board (4).

3. Fault-current protected thermostat according to claim 1 or 2, **characterized in that** the appliance is arranged to function, in addition to as a floor heating thermostat provided with a fault-current protector, as a combined floor heating thermostat/room thermostat or only as a room thermostat.

4. Fault-current protected thermostat according to any of the preceding claims, **characterized in that** the switch element part (21) of the fault-current protector part of the appliance is a plastic part moving to-and-fro against the inside bottom surface of the base part of the appliance, which moves the copper switching strips (33) of the main current circuit into the open or closed position.

5. Fault-current protected thermostat according to claim 1, **characterized in that** the base part (1) of the appliance contains essentially claw-like fixing parts (19) for fixing an additional module (20).

6. Fault-current protected thermostat according to any of the preceding claims, **characterized in that** the switch element part (21) of the fault-current protector part of the appliance is a plastic part inside the base part of the appliance moving to-and-fro on the bottom surface of the base part, and which contains an intermediate wall (36) to which the slot (23) connected to the shaft (28) controlling the alarm function of the additional module is fixed.

7. Fault-current protected thermostat according to any of the preceding claims, **characterized in that** in the base (1) of the appliance is a preferably rectangularly-shaped aperture (25) for the slot (23) controlling the alarm function, which protrudes through the surface of the additional module and belongs to the control of the alarm contacts of the additional module (20).

8. Fault-current protected thermostat according to any of the preceding claims, **characterized in that** the plastic part (21) of the switch element (26) of the fault-current part of the appliance that moves the copper switch slides (33) of the main current circuit can alternatively have a pin (34) on its bottom surface, which comes out of the rectangularly-shaped aperture (25) in the base part of the appliance, and which when the additional module is in use can be fixed directly to the slot (23) inside the module, which controls the alarm contacts and which contains a hole (31) corresponding to the pin.

9. Fault-current protected thermostat according to any of the preceding claims, **characterized in that** the additional module (20) connected to the base part of the appliance can be an additional relay module, an additional contact module, an additional circuit module, a remote control module, a monitoring module and/or an alarm contact module, wherein each module is a different module type separately or a model combining these.

10. Fault-current protected thermostat according to any of the preceding claims, **characterized in that** the testing pushbutton of the fault-current protector switch on the circuit board is fitted onto the top of the circuit board such that it can be directly tested by means of its own pushbutton stem (6) such that it can be depressed via the aperture going through the lid (2) and the component cover of the circuit board.

11. Fault-current protected thermostat according to any of the preceding claims, **characterized in that** the rapid connectors (13) of the sensor of the floor heating thermostat, the temperature drop adjustment potentiometer (14), the selection switch (15) of the room/floor heating thermostat and/or the potentiometer (16) for limiting the floor heating are connected on top of the circuit card preferably between the circuit card and the additional protective cover.
